# EUROPÄISCHE PATENTSCHRIFT

(11) **EP 0 504 698 B1**
(45) Veröffentlichungstag und Bekanntmachung des Hinweises auf die Patenterteilung: **05.10.1994**
(21) Anmeldenummer: 92103995.4
(22) Anmeldetag: 09.03.1992
(51) Int. Cl.: B60C 9/22, B60C 9/20

(54) **Fahrzeugluftreifen**
Pneumatic tyre for vehicles
Bandage pneumatique pour véhicules

(30) Priorität: 13.03.1991 DE 4108100
(43) Veröffentlichungstag der Anmeldung: 23.09.1992
(73) Patentinhaber: Continental Aktiengesellschaft, 30165 Hannover (DE)
(72) Erfinder: Kleinhoff, Klaus, W-3054 Rodenberg (DE)

(56) Entgegenhaltungen:
- DE-A- 4 015 223
- GB-A- 2 061 202
- GB-A- 2 064 445
- GB-A- 2 070 526

## Beschreibung

Die Erfindung betrifft einen Fahrzeugluftreifen mit einer Radialkarkasse, die in Wülsten durch Umschlingen zugfester Wulstkerne verankert ist, mit einem Verstärkungsgürtel und mit einem radial außen vom Gürtel angeordneten Paket von Abdecklagen, innerhalb derer die Festigkeitsträger im wesentlichen in Reifenumfangsrichtung verlaufen, wobei das Paket zumindest aus einer gelegten und zumindest einer durch Aufspulen erzeugten Wickelbandage besteht.

Mit dem Begriff "gelegte Bandage" ist eine Bandage gemeint, die in axialer Richtung aus ein bis drei Streifen aus Cordgewebe gebildet ist, welches in Umfangsrichtung auf den begürtelten Reifenrohling oder den Gürtelrohling aufgelegt wird. Vorzugsweise wird die gelegte Bandage axial ungeteilt ausgeführt. Während des Auflegens führt die Aufbautrommel eine geringe Anzahl von Umdrehungen aus entsprechend der gewünschten Schichtenanzahl der gelegten Bandage. Die Schichtenanzahl 1 wird zumindest für leichte Reifen bevorzugt.

Ein Charakteristikum gelegter Bandagen ist die Stelle, an der sie zur Endlosigkeit gefügt werden. Um eine Stelle verminderter Festigkeit zu vermeiden, die sich bei einem stumpf ausgebildeten Stoß unvermeidlicherweise ergeben würde, werden die zu fügenden Enden in einer kleinen Überlappung übereinander gelegt. Diese Überlappungsstelle bildet eine Stelle erhöhter Quersteifigkeit und erhöhter Masse; beides beeinträchtigt den Rundlauf. Andererseits haben gelegte Bandagen den Vorteil, daß sie schnell und kostengünstig zu erstellen sind.

Als Alternative zu gelegten Bandagen sind aufgespulte Bandagen bekannt, die häufig kurz als Wickelbandagen bezeichnet werden. Im Extremfall wird ein einzelner kautschukbeschichteter Festigkeitsträger aufgespult; mit dieser Extremvariante ist die Fügestelle auf einen einzigen Fadenquerschnitt reduziert und damit praktisch jegliche Ungleichförmigkeit eleminiert. Allerdings ist auch eine sehr hohe Anzahl von Trommelumdrehungen zum Aufbringen einer solchen eingängigen Helix erforderlich. In der Regel spult man einen Streifen mit einer geringen Vielzahl in der Größenordnung von 10 von nebeneinander liegenden, kautschukbeschichteten Fäden auf. Die Gangzahl der solchermaßen erzeugten Helix entspricht der Anzahl der im Streifen angeordneten Fäden und die Herstellungszeit dem entsprechenden Bruchteil.

Aus der DE 40 15 223 A1 ist ein gattungsgemäßer Reifen bekannt, bei dem die Vorteile beider Aufbautechniken von Bandagen dadurch miteinander kombiniert werden sollen, daß sich in axialer Schichtung zwischen zwei Wickelbandagen eine gelegte Bandage befinden soll. Alle drei Bandagen befinden sich auf gleicher radialen Höhe und haben direkten Kontakt miteinander nur über die schmalen Stirnseiten, die zudem von keinerlei Festigkeitsträgern durchsetzt sind. In einer Ausführung ist eine axial klein bemessene Überlappung der Wickelbandage über die gelegte Bandage gezeigt.

Bei einer solchen Anordnung entstehen an den exakt in Umfangsrichtung verlaufenden Rändern der mittleren, gelegten Bandage und den schrägverlaufenden Rändern der Wickelbandagen Stoßstellen mit ungleichmäßigem Abstand. Darüber hinaus wird die mittlere Bandage während der Behandlung in der Vulkanisationsform, insbesondere beim Schließen der vorzugsweise in radialer Teilung ausgeführten Form und den dabei auftretenden Fließbewegungen, nicht ausreichend an den beiden Wickelbandagen fixiert, so daß Verschiebungen während der Vulkanisation auftreten.

Der Erfindung liegt deshalb die Aufgabe zugrunde, einen Fahrzeugluftreifen mit einem Abdecklagenpaket anzugeben, das in kurzer Zeit hergestellt werden kann und eine große Gleichförmigkeit aufweist, die weitgehend während der Behandlung in der Vulkanisationsform erhalten bleiben soll bis hin zum fertigen Reifen.

Die Aufgabe wird erfindungsgemäß dadurch gelöst, daß sich die Wickelbandage in radialem Abstand zur gelegten Bandage befindet und über ihre gesamte axiale Breite mit letzterer verbunden ist. Der Kerngedanke der Erfindung besteht darin, von der axialen Schichtung der verschiedenen Bandagen abzukehren und statt dessen eine radiale Schichtung vorzunehmen. Hierdurch erhalten die verschiedenartigen Bandagen eine größere gegenseitige Kontaktfläche.

Die Erfindung läßt sich auch in solchen Fällen anwenden, wo die gelegte Bandage den Gürtel in seiner axialen Breite nicht vollständig überdeckt. Wesentlich ist nur die vollflächige Verbindung der beiden verschiedenartig hergestellten Bandagen untereinander. Hierdurch können sich deren Stirnseiten nicht gegeneinander verschieben.

Es ist sowohl möglich, die Wickelbandage radial innerhalb der gelegten Bandage anzuordnen, als auch umgekehrt, die Wickelbandage radial außerhalb der gelegten Bandage. Bei der zuerst genannten Anordnung werden weniger Kräfte in die axialen Ränder der gelegten Bandage vom Gürtel her eingeleitet. Bei der zweit genannten Anordnung vermögen beide Bandagen zusammen höhere Kräfte am Rand des Paketes abzufangen, zumal die gelegte Bandage in ihrem Querschnitt keinen Versatz aufweist. Die zweit genannte Anordnung, also die Wickelbandage in radial äußerer Position gegenüber der gelegten Bandage, wird bevorzugt, weil bei deren Aufbau leichter Verwerfungen und der Einschluß von Luftblasen vermieden werden können. Dies wiederum ermöglicht eine besonders knappe Gestaltung des Überlappungsbereiches der gelegten Bandage zu deren Endlosfügung; es sind Überlappungslängen unter 5 mm möglich. Überdies ergibt sich eine starke Fesselung der am meisten gefährdeten Gürtelrandbereiche.

Bei einer bevorzugten Ausführungsform der Erfindung besteht die gelegte Bandage aus einem breiten Einzelstreifen aus Cordmaterial, der den Gürtel vollständig abdeckt und der in Umfangsrichtung eine Windung mit einer geringfügigen Überlappung der Enden aufweist. Bei Bedarf können auch zwei Windungen mit einer kleinen Überlappungsstelle gebildet sein. Weiterhin kann der Streifen bei Bedarf in Umfangsrichtung in der Weise geteilt sein, daß sich zwei diametral gegenüberliegende Überlappungsstellen ergeben.

Vorzugsweise liegt die Wickelbandage in Form von zwei seperaten Kantenbandagen vor. Jede einzelne Kantenbandage nimmt höchstens ein Drittel der axialen Breite der inneren Abdeckung ein, bevorzugt 15 bis 25% dieser axialen Breite.

Während die Wickelbandage bei leichten Reifen zweckmäßigerweise aus einer Schicht besteht, sollte sie bei hoch belasteten Reifen aus zwei übereinander liegenden Schichten bestehen, wobei diese beiden Schichten bevorzugt in einem Arbeitsgang gewickelt werden. Statt der Bildung von zwei Lagen bei der Wickelbandage kann die Zweischichtigkeit auch dadurch erzeugt werden, daß sich benachbarte Streifen der Wickelbandage schindelartig überlappen.

Schließlich ist die Kombination einer gelegten Bandage mit einer gespulten Wickelbandage in der Weise möglich, daß die Wickelbandage im Bereich der Gürtelränder sich schindelartig überlappende Streifen aufweist, während im mittleren Bereich des Gürtels die einzelnen Streifen dicht nebeneinander liegen. Die Wickelbandage ist dann einteilig ausgeführt und überdeckt die gelegte Bandage vollständig; gleichwohl ist sie in den wichtigeren Schulterbereichen stärker ausgebildet als im Zenit.

Sowohl die gelegte Bandage als auch die Wickelbandage kann aus Textilcord, z.B. Nyloncord bestehen. Die für die Erzeugung der Wickelbandage bzw. der Kantenbandagen verwendeten Cordstreifen können bis ca. 16 mm breit sein und die Textilfäden in dem Streifen liegen vorzugsweise in einer Dichte von 6 bis 15 Fäden pro 10 mm Breite vor. Für den Aufbau relativ schmaler Kantenbandagen ist es günstig, eine Streifenbreite unter 10 mm zu verwenden.

Nach einer bevorzugten Ausführung der Erfindung sind die Fäden der Wickelbandage bzw. der Kantenbandagen stärker gewählt als die der gelegten Bandage. Vorzugsweise wird die höhere Stärke, das heißt Fadenfestigkeit, nicht durch eine größere Dicke sondern durch ein pro Querschnittsfläche reißfesteres Material erzielt. Weiterhin ist es günstig, die Fadendichte der Wickelbandage bzw. der Kantenbandagen um mindestens 20% höher zu wählen als die der gelegten Bandage.

Nachfolgend werden einige Ausführungsbeispiele der Erfindung anhand einer Zeichnung näher erläutert. Es zeigt
- Fig.1: einen Fahrzeugluftreifen mit einer einschichtigen gelegten Bandage und einer aus zwei gespulten Kantenbandagen bestehenden Wickelbandage in einem radialen Teilschnitt,
- Fig.2: den Reifen der Fig. 1 in einer perspektivischen Darstellung,
- Fig.3: einen Reifen mit einer zweischichtigen gelegten Bandage und zwei zweischichtigen gespulten Kantenbandagen,
- Fig.4: einen Reifen mit einer einschichtigen gelegten Bandage und zwei Kantenbandagen mit schindelartig sich überdeckenden Streifen,
- Fig.5: einen Reifen mit einer einschichtigen gelegten Bandage und radial außen davon einer einteiligen, gespulten Wickelbandage, bei der sich benachbarte Streifen im Bereich der Gürtelränder schindelartig überlappen, während sie im Bereich der Gürtelmitte dicht an dicht liegen.

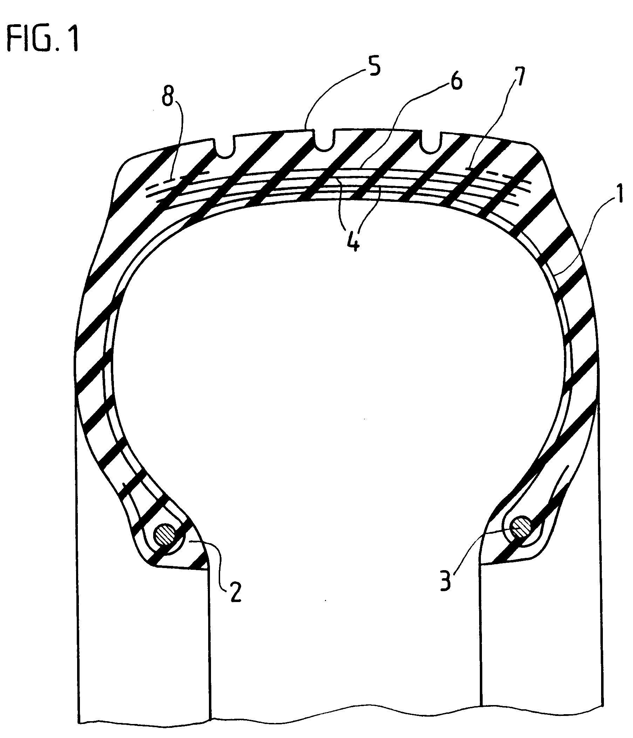

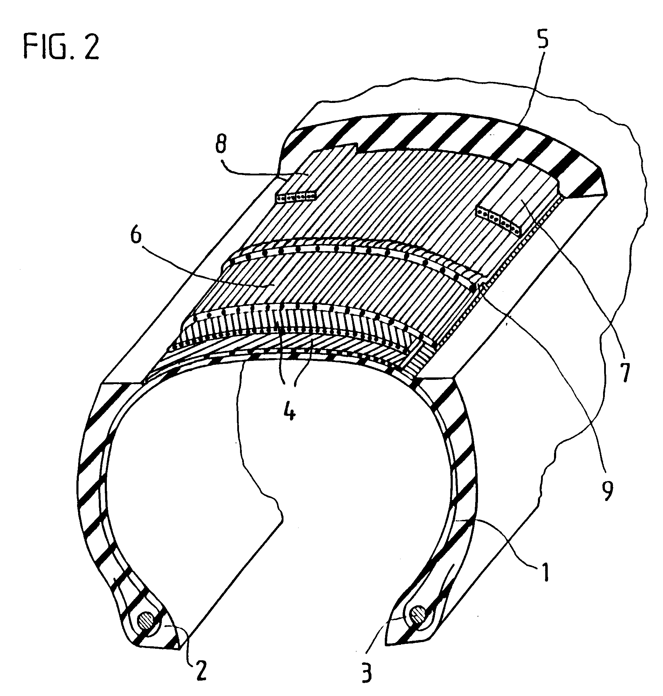

Der Reifen der Fig. 1 und 2 weist eine Radialkarkasse 1 auf, die in den Wülsten 2 durch Umschlingen zugfester Wulstkerne 3 verankert ist. Radial außen von der Karkasse 1 befindet sich ein üblicher Verstärkungsgürtel 4. Zwischen ihm und dem Laufstreifen 5 befindet sich ein Abecklagenpaket, das aus einer gelegten Bandage 6 und einer gespulten Wickelbandage in Form von zwei Kantenbandagen 7 und 8 besteht. Die radial innen befindliche, gelegte Bandage 6 ist von einem einzelnen breiten Cordstreifen gebildet, dessen Enden in einem kleinen Überlappungsbereich 9 zur Endlosigkeit gefügt sind. Die Überlappungslänge kann dabei zwischen 1 und 5 mm liegen. Die Kantenbandagen 7 und 8 werden durch Aufbringen von einem Streifenmaterial aus Nyloncord einer Streifenbreite von ca. 10 mm in mehreren Windungen erzeugt. Jede der Kantenbandagen 7, 8 hat eine axiale Breite, die etwa 20% der axialen Breite der gelegten Bandage 6 entspricht.

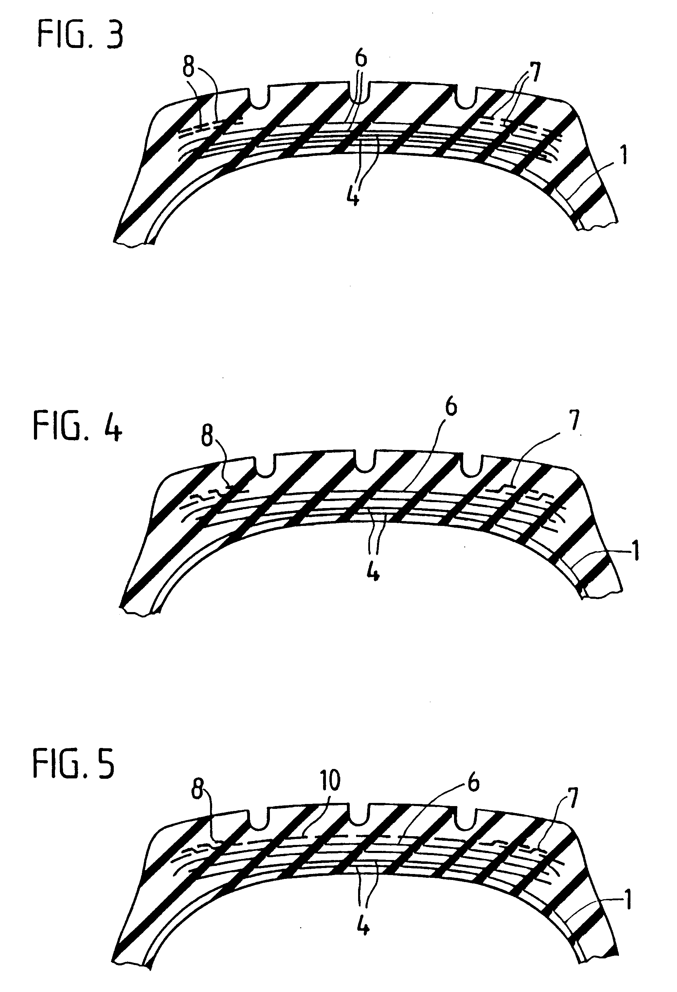

Der Reifen der Fig. 3 unterscheidet sich von dem vorstehend beschriebenen Beispiel dadurch, daß zum einen die gelegte Bandage 6 zweischichtig ausgebildet ist und,daß zum anderen jede der Kantenbandagen 7 und 8 ebenfalls in radialer Richtung zwei Schichten aufweist, wobei jede der Kantenbandagen 7, 8 zweckmäßigerweise durch Hin- und Herfahren einer Wickelvorrichtung in einem einzigen Arbeitsgang erzeugt wird.

In Fig. 4 ist eine Variante dargestellt, bei der die innere Abdeckung 6 wiederum einschichtig ausgebildet ist, während die Kantenbandagen 7, 8 durch schindelartige Überlappung benachbarter Streifen erzeugt sind. Auch mit dieser Ausbildung der Kantenbandagen 7, 8 erhält man eine höhere Festigkeit in den Gürtelrandbereichen. Die Überlappungsbreite entspricht vorzugsweise der halben Streifenbreite.

Schließlich zeigt Fig. 5 einen Fahrzeugreifen mit einem Abdecklagenpaket, das aus einer einschichtigen gelegten Bandage 6 und einer einschichtigen Wickelbandage 10 besteht. Um auch mit dieser axial ungeteilten Wickelbandage 10 im Bereich der Gürtelränder eine verstärkte Bandagenwirkung zu erzielen, sind benachbarte Streifen der Wickelbandage 10 sich überlappend angeordnet, während die Streifen im mittleren Abschnitt des Gürtels 4 dicht an dicht liegen.

Man kann weitere Varianten durch Kombination einzelner Elemente der beschriebenen Beispiele erzeugen. Das Wichtigste der Erfindung ist, daß sich die verschiedenartig erzeugten Bandagen auf verschiedenem Radius befinden und daß die Wickelbandage über ihre gesamte axiale Breite mit der gelegten Bandage verbunden ist.

## Patentansprüche

1. Fahrzeugluftreifen mit einer Radialkarkasse (1), die in Wülsten (2) durch Umschlingen zugfester Wulstkerne (3) verankert ist, mit einem Verstärkungsgürtel (4) und mit einem radial außen vom Gürtel (4) angeordneten Paket von Abdecklagen, innerhalb derer die Festigkeitsträger im wesentlichen in Reifenumfangsrichtung verlaufen, wobei das Paket zumindest aus einer gelegten Bandage (6) und zumindest einer durch Aufspulen erzeugten Wickelbandage (7, 8, 10) besteht, **dadurch gekennzeichnet,** daß sich die Wickelbandage (7, 8, 10) in radialem Abstand zur gelegten Bandage (6) befindet und über ihre gesamte axiale Breite mit letzterer (6) verbunden ist.

2. Fahrzeugluftreifen nach Anspruch 1, dadurch gekennzeichnet, daß die Wickelbandage in zwei seperate Teile (7, 8) unterteilt ist, von denen ein jeder (7, 8) in der Axialen so angeordnet ist, daß er sich über den Gürtelrandbereichen befindet.

3. Fahrzeugluftreifen nach Anspruch 2, dadurch gekennzeichnet, daß die Breite eines jeden der beiden - auch als Kantenbandagen (7, 8) bezeichneten - seperaten Teile (7, 8) der Wickelbandage, höchstens ein Drittel der axialen Breite der gelegten Bandage (6) beträgt.

4. Fahrzeugluftreifen nach Anspruch1, dadurch gekennzeichnet, daß sich die Wickelbandage (7, 8, 10) radial außerhalb der gelegten Bandage befindet.

5. Fahrzeugluftreifen nach Anspruch 1, dadurch gekennzeichnet, daß die gelegte Bandage (6) einschichtig ausgebildet ist und ihre Enden beim fertigen Reifen einen Überlappungsbereich (9) von 1 bis 5 mm aufweisen.

6. Fahrzeugluftreifen nach Anspruch 1, dadurch gekennzeichnet, daß das Paket nur eine einzige gelegte Bandage (6) enthält, die in an sich bekannter Weise aus einem einzigen Streifen gebildet ist, dessen Breite etwa mit der Breite des Gürtels übereinstimmt.

7. Fahrzeugluftreifen nach zumindest einem der vorangehenden Ansprüche, dadurch gekennzeichnet, daß die Wickelbandagen (7, 8, 10) einschichtig vorliegen.

8. Fahrzeugluftreifen nach einem der vorangehenden Ansprüche außer Anspruch 6 dadurch gekennzeichnet, daß die Wickelbandagen (7, 8, 10) mehrschichtig vorliegen.

9. Fahrzeugluftreifen nach Anspruch 1 oder 2, dadurch gekennzeichnet, daß die Cordstreifen der Wickelbandangen (7, 8, 10) bis ca. 16 mm breit sind.

10. Fahrzeugluftreifen nach Anspruch 1 oder 2, dadurch gekennzeichnet, daß benachbarte Streifen in zumindest einer der der Wickelbandagen (7, 8, 10) sich teilweise überlappen.

11. Fahrzeugluftreifen nach Anspruch 1 oder 2, dadurch gekennzeichnet, daß die Fäden der Wickelbandagen (7, 8, 10) stärker sind als die der gelegten Bandage (6).

12. Fahrzeugluftreifen nach Anspruch 1, dadurch gekennzeichnet, daß die Fadendichte der Wickelbandagen (7,8,10) um mindestens 20% höher ist als die der gelegten Bandage.

## Claims

1. Pneumatic vehicle tyre, having a radial carcase (1), which is secured in beads (2) by being looped around substantially inextensible bead cores (3), a reinforcing belt (4) and a bundle of cover plies, which is disposed radially externally of the belt (4), the reinforcing members extending internally of said cover plies substantially in the circumferential direction of the tyre, the bundle comprising at least one laid bandage (6) and at least one wrapping bandage (7, 8, 10), which is wound in position, characterised in that the wrapping bandage (7, 8, 10) is radially spaced from the laid bandage (6) and connected to said bandage (6) over its entire axial width.

2. Pneumatic vehicle tyre according to claim 1, characterised in that the wrapping bandage is divided into two separate portions (7, 8), each one of which portions (7, 8) is disposed in the axial direction such that it is situated above the edge regions of the belt.

3. Pneumatic vehicle tyre according to claim 2, characterised in that the width of each of the two separate portions (7, 8) of the wrapping bandage - also called edge bandages (7, 8) - amounts, at most, to one-third of the axial width of the laid bandage (6).

4. Pneumatic vehicle tyre according to claim 1, characterised in that the wrapping bandage (7, 8, 10) is situated radially externally of the laid bandage.

5. Pneumatic vehicle tyre according to claim 1, characterised in that the laid bandage (6) has a one-layered configuration, and its ends have an overlapping region (9) of between 1 and 5 mm when the tyre is completed.

6. Pneumatic vehicle tyre according to claim 1, characterised in that the bundle only contains one single laid bandage (6), which is formed from a single strip in a manner known per se, the width of said strip substantially corresponding to the width of the belt.

7. Pneumatic vehicle tyre according to at least one of the preceding claims, characterised in that the wrapping bandages (7, 8, 10) are single-layered.

8. Pneumatic vehicle tyre according to one of the preceding claims except claim 6, characterised in that the wrapping bandages (7, 8, 10) are multi-layered.

9. Pneumatic vehicle tyre according to claim 1 or 2, characterised in that the cord strips of the wrapping bandages (7, 8, 10) are up to approx. 16 mm wide.

10. Pneumatic vehicle tyre according to claim 1 or 2, characterised in that adjacent strips in at least one of the wrapping bandages (7, 8, 10) partially overlap one another.

11. Pneumatic vehicle tyre according to claim 1 or 2, characterised in that the filaments of the wrapping bandages (7, 8, 10) are thicker than those of the laid bandage (6).

12. Pneumatic vehicle tyre according to claim 1, characterised in that the filament density of the wrapping bandages (7, 8, 10) is at least 20 % higher than that of the laid bandage.

## Revendications

1. Pneumatique de véhicule automobile comportant une carcasse radiale (1) qui est ancrée dans des talons (2) par enroulement autour de tringles de talon (3) résistant à la traction, comportant une ceinture de renfort (4) et un paquet de couches de couverture disposées à l'extérieur radialement de la ceinture (4), à l'intérieur desquelles les supports de résistance s'étendent essentiellement dans la direction périphérique du pneumatique, le paquet étant constitué d'au moins un bandage (6) posé à plat et d'au moins un bandage enroulé (7, 8, 10) obtenu par bobinage, caractérisé en ce que le bandage enroulé (7, 8, 10) se trouve à une certaine distance radiale du bandage (6) posé à plat et est relié avec ce dernier (6) sur toute sa largeur axiale.

2. Pneumatique de véhicule automobile selon la revendication 1, caractérisé en ce que le bandage enroulé est partagé en deux parties (7, 8) séparées dont chaque partie (7, 8) est disposée axialement de manière à se trouver au-dessus des zones de bordure de la ceinture.

3. Pneumatique de véhicule automobile selon la revendication 2, caractérisé en ce que la largeur de chacune des deux parties (7, 8) séparées - désignées aussi par bandages de bordure (7, 8) - du bandage enroulé, représente au plus un tiers de la largeur axiale du bandage (6) posé à plat.

4. Pneumatique de véhicule automobile selon la revendication 1, caractérisé en ce que le bandage enroulé (7, 8, 10) se trouve à l'extérieur radialement du bandage posé à plat.

5. Pneumatique de véhicule automobile selon la revendication 1, caractérisé en ce que le bandage (6) posé à plat est constitué d'une seule couche et ses extrémités présentent, lorsque le pneu est fini, une zone de recouvrement (9) de 1 à 5 mm.

6. Pneumatique de véhicule automobile selon la revendication 1, caractérisé en ce que le paquet ne contient qu'un seul bandage (6) posé à plat, qui est formé, de manière connue en soi, d'une seule bande dont la largeur correspond à peu près à celle de la ceinture.

7. Pneumatique de véhicule automobile selon l'une au moins des revendications précédentes, caractérisé en ce que les bandages enroulés (7, 8, 10) ne présentent qu'une seule couche.

8. Pneumatique de véhicule automobile selon l'une des revendications précédentes à l'exception de la revendication 6, caractérisé en ce que tes bandages enroulés (7, 8, 10) présentent plusieurs couches.

9. Pneumatique de véhicule automobile selon les revendications 1 ou 2, caractérisé en ce que les bandes de corde des bandages enroulés (7, 8, 10) ont une largeur pouvant aller jusqu'à 16 mm environ.

10. Pneumatique de véhicule automobile selon tes revendications 1 ou 2, caractérisé en ce que les bandes voisines dans au moins l'un des bandages enroulés (7, 8, 10), se recouvrent partiellement.

11. Pneumatique de véhicule automobile selon les revendications 1 ou 2, caractérisé en ce que les fils des bandages enroulés (7, 8, 10) sont plus épais que ceux du bandage (6) posé à plat.

12. Pneumatique de véhicule automobile selon la revendication 1, caractérisé en ce que la densité des fils des bandages enroulés (7, 8, 10) est supérieure d'au moins 20 % à celle du bandage posé à plat.
